# EUROPEAN PATENT APPLICATION

(11) **EP 2 258 899 A1**
(43) Date of publication of application: **08.12.2010**
(21) Application number: 09161705.0
(22) Date of filing: 02.06.2009
(51) Int. Cl.: D06N 1/00, D06N 3/00, E04F 15/02, B32B 27/12

(54) **Magnetic layered structure**

(71) Applicant: Tarkett GDL S.A., 9779 Lentzweiler (LU)
(72) Inventor: Bartoletti, Antonella, 06132 San Martino in Colle Perugia (IT); Zago, Daniele, 05100 Terni (IT)
(74) Representative: pronovem

(57) **Abstract**

A layered structure reversibly attachable to a magnetically attractable support, said structure comprising a base (a) comprising (a1) a textile backing layer (11), preferably made of natural jute, and (a2) a linoleum based layer (12) comprising oxidized drying oil, preferably polyunsaturated oil, rosin-type component and optionally auxiliary material(s), wherein the linoleum based layer further comprises 30 to 70 % by weight, preferably 35 to 65 % by weight of a particulate magnetized material based on layer (a2).

## Description

### Technical field

The present invention generally relates to a layered structure reversibly attachable to a magnetically attractable support, a process of manufacturing it and the use thereof, in particular as surface coverings, such as floor coverings.

### Background Art

It is well known within the art to make articles which are magnetic in order to be removably fixed to surface which are susceptible of magnetic attraction. Such articles comprise planar structures, which are suitable as surface coverings or even floor coverings.

For example, GB 1 573 492 describes a planar floor covering, such as a carpet, rug, tile or mat, whose backing surface incorporates particles which have been magnetized, the magnetized particles being sufficiently close to the surface of the backing layer, or sufficiently strongly magnetized, or both, as to cause the floor covering to "cling" to a ferromagnetic strip, a series of ferromagnetic studs, or another magnetized surface secured to or forming part of a floor surface, when the covering is disposed thereon.

US 3 341 996 describes floor structures comprising a subflooring having a first magnetic material affixed thereto, a floor covering layer comprising a decorative sheet disposed on the subflooring with the decorative sheet having a second magnetic material affixed thereto and with at least one of said magnetic materials being permanently magnetized whereby the covering layer is retained upon the subflooring by magnetic attraction. Advantageously, the floor covering layer consists of tiles formed of a top decorative sheet and laminated thereto strips or full covering sheets of magnetic particles held in a (thermo)plastic binder matrix. In one embodiment, such magnetized floor tiles consist of a top decorative sheet of vinyl chloride polymer laminated to a bottom sheet comprising metal permanently magnetized ferrite particles in a PVC matrix.

FR 2 350 445, resp. DE 2620095 disclose a process for the installation of readily exchangeable decorations of surface made of stone, ceramic, wood, metal or other materials on surfaces of walls, ceilings and/or floors, wherein a layer of a binder highly filled with iron powder is applied and hardened on one of two surfaces to be opposed in the final state, and on the other surface a layer of a binder highly filled with a magnetic powder who magnetizes the other layer is applied and hardened, the decoration being fixed by the magnetic effect on surface to be decorated. The binder may be organic or inorganic, e.g. thermoplastic, preferably thermoset or cured plastics.

US 5 752 357 describes a similar product or process, but in which, during the production of the covering, magnetically attracting or attractable particulate material is directly integrated in the material part adjacent to the base.

In fact, all the known products and processes either use discrete magnetic strips to attach a planar structure to a support or even sheet-like structures in which a magnetizable material is incorporated into a synthetic thermoplastic or thermoset binder. Major disadvantages of such solutions are that they are difficult to recycle, they are not based on renewable raw materials thus they are not biodegradable and/or they often contain volatile and/or hazardous materials.

### Technical problem

It is an object of the present invention to provide an alternative to existing solutions, which is less or preferably not at all subject to the drawbacks presented above, but which nevertheless offer the benefits known from conventional products.

This object is achieved by a layered structure as claimed in claim 1.

### General Description of the Invention

In order to overcome at least some of the above-mentioned problems, the present invention proposes a layered structure reversibly attachable to a magnetically attractable support, said structure comprising a base (a) which comprises
(a1) a textile backing layer, preferably made of natural jute, and
(a2) a linoleum based layer comprising oxidized and cured drying oil, preferably polyunsaturated oil or mixtures thereof, such as linseed oil, tung oil, soya oil, sunflower oil, perilla oil, walnut oil, poppy seed oil, etc. or mixtures thereof, rosin-type component and optionally auxiliary material(s), wherein the linoleum based layer further comprises 30 to 70 % by weight, preferably 35 to 65 % by weight of a particulate magnetized material based on layer (a2).

The layered structure of the invention can be used for surface coverings, e.g. magnetic tiles, attachable to magnetically attractable surfaces, such as removable steel technical floor, metallic raised access flooring (steel encapsulated) and presents the advantages already known for similar synthetic products, such as reversible attaching without glue or click, no particular subfloor preparation, easy removal or replacement (even partial in case of damage) and easy installation and flexibility of design (possible to mix different colors or patterns).

The present linoleum based layered structure however further has the advantage of being hypo-allergenic or even non-allergenic in nature, it does not contain potentially hazardous compounds, such as plasticizers or other volatile compounds, nor does it produce toxic dioxins during combustion.

Furthermore, the basic composition of the layered structure being based on linoleum, made with natural and renewable ingredients, it is durable, which reduces waste and the need to replace flooring. It is also biodegradable at the end of its life cycle (except of course for the inert magnetizable material).

The particulate magnetizable material of the present invention may be any appropriate finely divided magnetizable material, in particular isotropic or anisotropic ferrite powders, alone or in admixture with other materials. Ferrite powders of the type MO.6Fe₂O₃ wherein M is Ba, Sr, Ca or Pb or mixtures thereof are preferred. A particularly preferred particulate magnetizable material is strontium ferrite powder, more preferably hexagonal strontium ferrite SrFe₁₂O₁₉ powder provided with a low granule size, such as those suitable for the production of plastic magnets.

The magnetic flux density achievable with the anisotropic type is higher than with the isotropic type because the particles have an anisotropic shape and they get an anisotropic orientation by the presence of a magnetic field. Of course the isotropic type is much cheaper and, according to the requested final magnetic performance, it can be used for the present linoleum based structures.

As already mentioned, the magnetizable material must be particulate, preferably in the form of a powder or even fine powder in order to not compromise the flexibility of the final magnetic sheet. Preferably the magnetizable particles have sizes below 200 µm, more preferably below 100 µm, still more preferably below 75 µm. For example, a particularly appropriate hexagonal strontium ferrite powder has a sieve analysis as follows:

> 71 µm < 0,3 % by weight,

> 32 µm < 15 % by weight.

A particulate magnetized material is a particulate magnetizable material as described above which has been magnetized by exposure to a magnetic field, e.g. using a magnetizer, which is suitable to orientate the magnetic domains inside the material by exerting a magnetic field. The equipment may be mainly made of a permanent magnetic bar or roll and the layered structure is passed trough the magnetizer. Equipments with electromagnetic plate or roll are also appropriate.

As mentioned the basic composition of base (a) is linoleum based and as such may contain all ingredients conventionally used in the art. Conventionally, linoleum is made from linoleum cement, which is oxidized linseed oil and rosin (colophony), to which cement are added auxiliaries, such as fillers, processing aids and catalysts. However, processability problems may arise for such conventionally based compositions if they integrate even relatively low contents of particulate magnetizable material. It has been noticed that when using conventional linoleum compositions, the paste obtained during mixing of the ingredients may become too tough and gummy, which causes problems during processing.

The inventors have surprisingly found that by replacing at least part of the conventional rosin (colophony) with esterified tall oil, the rheological properties are enhanced, thereby obtaining a linoleum cement which is softer and easier to process. According to the current price of raw materials, esterified tall oil can also be used to replace partly or totally colophony and reduce e.g. linseed oil content in the recipe.

Hence, in a further embodiment, the rosin-type component is chosen among rosins, tall oil esters and mixtures thereof, preferably the rosin-type component is essentially tall oil esters, i.e. tall oil esterified with one or more polyalcohols, in particular tall oil pentaerythrityl ester. The fraction by weight of tall oil ester usable in the present invention is up to 75 %, generally however the content of resin acid will be from 3 % to 30 %, more preferably from 5 % to 20 %, most preferably from 8 % to 12 %.

Tall oil is a viscous yellow-black and odorous liquid obtained as a byproduct of the extraction process of cellulose (Kraft process of wood pulp manufacture).

Crude tall oil contains rosins, unsaponifiable sterols (5-10%), resin acids (mainly abietic acid and its isomers), fatty acids (mainly palmitic acid, oleic acid and linoleic acid), fatty alcohols, some sterols, and other alkyl hydrocarbon derivates. When esterified with pentaerythritol (C₅H₁₂O₄), it is used as a compound of adhesives and oil-based varnishes.

This esterified product can thus be used in the oxidation of drying oil (as partial or total substitute of rosin or colophony) to produce a linoleum cement which is not only easier to process, but also less expensive (depending of course on the current price of raw materials).

The one or more auxiliary materials for use in layer (a2) are preferably chosen among fillers, preferably naturally occurring fillers, such as calcium carbonate, among (preferably natural) processing aids, e.g. wood flour or cork flour, among catalysts, among pigments, or mixtures thereof. "

The layered structure comprising base (a) (which is also called magnetic linoleum), may be used as such for covering surfaces. However, in a preferred embodiment, especially for covering surfaces subject to high wear, such as floors, the layered structure further comprises a wear or top layer (c) made of any appropriate flexible or stiff material, such as stone, ceramic, wood, metal, carpet, resilient materials (such as plastic, rubber and linoleum). This wear layer can be directly affixed to base (a) to give a layered structure of type (a)(c) or, in a further preferred embodiment via an intermediate resilient and/or acoustic layer (b) to give a layered structure of the type (a)(b)(c).

In particular, the wear layer (c) or, if present, the resilient and/or acoustic layer (b) may be affixed to the backing layer (a1) side of base (a) or on the linoleum based layer (a2) side of the base. Hence, the layered structure may be of the type (a2a1)(c), (a1a2)(c), (a2a1)(b)(c) or (a1a2)(b)(c). Preferably, the wear layer (c) or, if present, the resilient and/or acoustic layer (b) is affixed to the backing layer (a1) side of base (a), such as in structures of types (a2a1)(c) or (a2a1)(b)(c).

The thickness of base (a) is preferably at least 0.5 mm and more preferably at least 0.75 mm. The thickness is generally at most 3 mm, preferably at most 1.5 mm. In particular, when the layered structure also comprises layer (c) and optionally layer (b), the preferred thickness is about 1 mm. A further advantage of thicknesses of less than 1.5 mm is that the curing step of base (a) takes less time, such as 7 to 10 days for a thickness of about 1 mm.

If used, layer (b) may be made of any appropriate material, such as synthetic materials like flexible polyurethane, polyolefin, rubber, latex, preferably a synthetic foam material, more preferably polyurethane foam, or still further preferred a natural material, preferably comprising cork, especially linoleum with high cork content. Cork content in linoleum formulations particularly suitable for resilient/acoustic layer (b) can be increased up to 45 % or even higher. In standard linoleum the content is on the contrary much lower, below 5%.

The layers can be affixed each other by gluing, using any appropriate adhesive such as polyurethane adhesives, vinyl adhesives or other types. According to the requirements of the adhesive, pressure and/or temperature can be applied for gluing. The layers can be affixed by using a thermobonding film (hotmelt) as adhesive and an AUMA (i.e. rotary press). A hotmelt which suits well is polyethylene (PE) based hotmelt, because of its low melting temperature and good adhesion performance. In the alternative, the homelt can be made of other types of polymers or copolymers, such as polyamide, polyurethane or other types. In particular, a biodegradable adhesive, such as polylactic acid (PLA) hotmelt, may advantageously be used.

It has to be noted that each of layers (b) and (c) per se may be comprised of more than one layer, if necessary or desirable.

A further aspect of the invention is the use of a layered structure as herein described for reversibly attaching said structure to a surface, preferably a floor surface, wherein said surface is a magnetically attractable support surface.

In a further aspect, the invention provides for a method for producing a layered structure, wherein the method comprises the following steps: (1) oxidation of drying oil(s), usually polyunsaturated oil(s) such as linseed oil, tung oil, soya oil, sunflower oil, perilla oil, walnut oil, poppy seed oil, etc., or mixtures thereof, rosin-type component, preferably rosin and/or tall oil, and optionally auxiliary material(s) to produce linoleum cement (2) mixing linoleum cement and optionally auxiliary material(s) with 30 to 70 % by weight, preferably 35 to 65 % by weight of a particulate magnetizable material based on the mixture of step (2), (3) calendering the mixture of step (1) on a textile backing layer (a1), preferably made of natural jute, to provide a base (a), (4) curing said base (a) to polymerize the drying oil(s), and (5) magnetizing the particulate magnetizable material in cured base (a) by exposure to a magnetic field.

The major benefit of such a process, further to the advantages of the product which it permits to produce, is the fact that no particular or new machines or devices are a priori needed to manufacture the product described herein. Therefore, existing equipment can be used, even the successive manufacturing of conventional and new magnetic linoleum based products is possible without substantive alteration in the installations or their operating. Basically, the only further equipment needed is a magnetizer unit suitable to apply a magnetic field on the finished product.

Mixing step (2) is preferably effected at temperatures between of at least above 45, preferably above 50°C. In fact, it has been found that at least magnetic formulations with higher magnetizable material contents are more sensitive to process temperature than standard recipe.

The mixing can be done in any appropriate mixing apparatus, preferably in a Banbury type mixer. The standard mixing time, considering e.g. the Banbury process, is between 2 and 12 minutes, generally ca. 6 minutes. If the temperature is very low (i.e. below 45°C), the mixing time could rise up to 18-20 minutes.

For a proper mixing by Banbury, it is advantageous to mix the linoleum cement, the powders (e.g. wood/cork/fillers) and the magnetizable material (e.g. ferrite powder) in this sequence. Ferrite powder is thus preferably be added as last ingredient and when the banbury has achieved the proper temperature.

For higher proportions of magnetizable material, or even for any of the present formulations, it might be advantageous to replace at least part or even the entirety of the rosins commonly used in linoleum manufacture with tall oil esters as described above. In fact, it has been found that the mixture is much easier to process due to enhanced rheological properties imparted by the tall oil esters. The inventors have found that good tall oil esters in terms of oxidation time, cement quality (calendering) and finished goods (indentation and flexibility) have an acid value of 15-25 mg KOH/g ester. Percentages of tall oil ester > 25% give a good cement processable without compromising the final product.

In calendering step (3), the paste is preferably calendered at a temperature of around 60-70°C. In such a case, it is preferable to avoid cooling during crumb transportation from mixing process to calendering process. In fact, it has been found that, depending on the magnetizable material content, if the crumb temperature is too low the risk of jute breaking increases strongly due to paste hardness. For the higher ferrite powder contents in the formulation, the process is preferably entirely done with the paste at the above-indicated temperatures.

Curing step (4) can also be done conventionally. Generally, curing temperature will be set at a value in range from 70°C to 90°C with a constant air flow rate in order to guarantee a constant intake of oxygen.

For example, for a thickness of the calendered product of about 1.00 mm and the particular formulation with a high content of ferrite powder, the layered structure can be cured in only 7 to 10 days, whereas conventional linoleum with 2.50 mm thickness normally needs a few weeks.

After curing the product can be rolled up as normally done for standard linoleum and/or cut into tiles, etc., e.g. into tiles of 50x50 cm or 61x61 cm for instance by a die cutting.

The layered structure, of course, does not have magnetic properties yet. In fact, the product can be magnetized in step (5) at any time after the curing of the product using a magnetizer, which is suitable to orientate the magnetic domains inside the material by exerting a magnetic field. The equipment can be made of a permanent magnetic bar or roll and layered structure is passed trough the magnetic field. Other equipments with electromagnetic plate or roll are also available.

The method preferably further comprises the step of affixing a resilient and/or acoustic layer (b) to the cured base (a), preferably to the backing layer (a1) side of said cured base (a). Layer (b) may be of any appropriate type, be it foam or preferably layers derived from natural products, such as cork or linoleum with high cork content, e.g. a product such as Elafono. The affixing may be made by any appropriate means as described above, but preferably using an adhesive, more preferably a hotmelt adhesive.

In a further embodiment, the method also or alternatively comprises the step of affixing a wear layer (c) to base (a), preferably to the backing layer (a1) side of said cured base (a), or, if present, to layer (b), preferably using an adhesive, more preferably a hotmelt adhesive as described above. In case of hard wear layers, such as stone, ceramic, wood or metal, the auma press, which is a rotary press, cannot be used. A gluing process has to be adopted.

The wear layer may be of any type appropriate for the intended use. In particular, for floor coverings one can use flexible or stiff planar material, such as stone, ceramic, wood, metal, carpet, resilient materials (such as plastic, rubber and linoleum).

For the affixing any appropriate method can be used. In a particularly preferred method either layer (b) or (c), or both, can be affixed using an adhesive, preferably a hotmelt adhesive as described above. The adhesive can be fed separately or preglued to any of these layers. Base (a), optionally layer (b) and layer (c) can be attached together in a press, preferably in a rotary press, such as an AUMA press in the case of flexible layers (e.g. no stone, ceramic or wood). The adhesive (hotmelt) can be fed separately or preglued on one or both the sides of resilient/acoustic layer (b).

The layers can also be affixed to each other by gluing, preferably using polyurethane adhesives, vinyl adhesives or any other appropriate adhesive. The process, as usually done for several different applications, simply consists in spreading or spraying the glue on one or both the surfaces and then press the layers to ensure adhesion. If required, a pressing step can be carried out at an increased temperature. Typical conditions e.g. for vinyl glue are: P = 80 bars and T = 70°C.

Furthermore, the method may additionally comprise the step of cutting the layered structure into tiles, strips, or any other desirable forms.

It is preferable to magnetize (5) as last process step. Indeed if the layer affixing process is done by auma or by any process involving a high temperature (above 150°C), such high temperature could "disarrange" the magnetic domain loosing partly or totally the magnetic properties. In addition, processing magnetized material by machineries having metallic components could obviously cause problems due to adhesion of products processed.

As already mentioned, it might be preferable to use tall oil ester cement. Using standard Linoleum cement with colophony, which is generally tougher and harder, the paste could become too hard and/or gummy and problems, mainly in terms of compound processing, could arise.

The stock time of cement has an important role too. The use of cement with a low stock time can give a compound too sticky and difficult to process. During stock the oxidation process goes on continuously and the product gets drier. A stock time of 7-10days or even above is recommended.

### Brief Description of the Drawings

Preferred embodiments of the invention will now be described, by way of example, with reference to the accompanying drawings in which:
Fig. 1 is a schematic view of a layered structure according to the invention made of a base 10 comprising a backing layer 11 and a magnetic linoleum based layer 12;
Fig. 2 is a schematic view of a preferred embodiment of a layered structure 40 made of a magnetic base 10, a resilient and/or acoustic layer 20 and a wear layer 30 magnetically attachable to a surface 50;
Fig. 3 represents a schematic view of a preferred embodiment for manufacturing a layered structure comprising a base 10 and a resilient and/or acoustic layer 20 in a heating press 100;
Fig. 4 is an alternative embodiment of that presented in Fig. 3; and
Fig. 5 is a further alternative embodiment of that presented in Fig. 3.

Further details and advantages of the present invention will be apparent from the following detailed description of several not limiting embodiments with reference to the attached drawings.

### Description of Preferred Embodiments

**Case 1: Production of a base (a)**

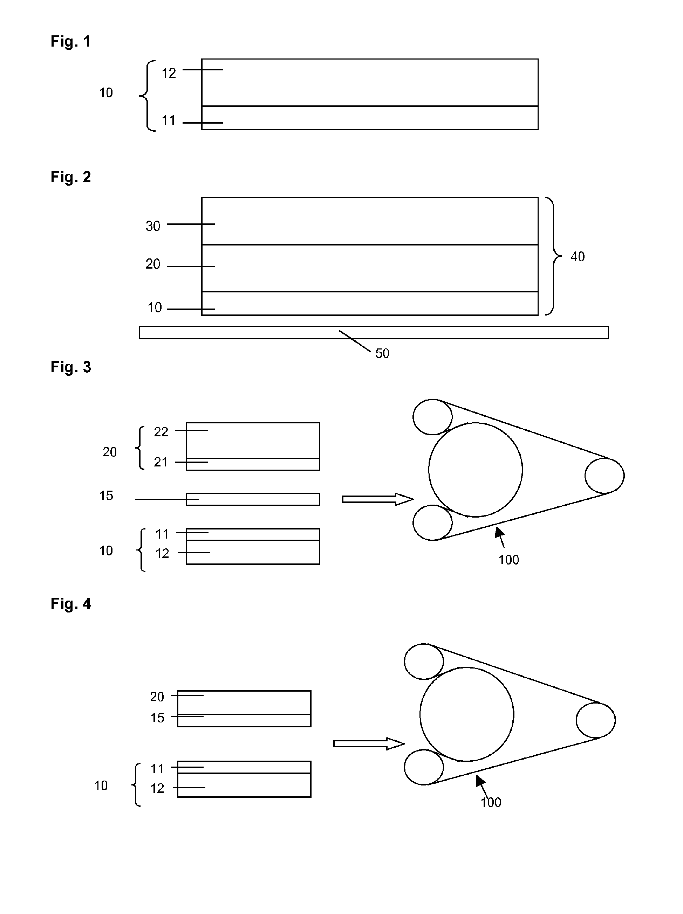

Base (a) (as represented in Fig. 1) can in principle be obtained by a standard production process of linoleum, but modifying opportunely the linoleum paste recipe and adding a "magnetization" treatment at the end of the process.

Starting from the raw materials, the following ingredients have been used:
- Linoleum cement: it is the basic and natural polymer suitable to produce the standard linoleum, obtainable by the oxidation process of linseed oil, adding natural rosin and fillers.
- Wood flour and/or cork flour: they are used to improve the processability
- Calcium Carbonate: it is a filler mainly added for economical reason
- Ferrite powder: it is a powder based on a strontium ferrite composition (SrFe₁₂O₁₉), provided with a low granules size, and suitable for the production of plastic magnets.

The quantity of ferrite powder in the formulation has a key role in the final magnetic performances. The magnetic adherence strength of a magnet is proportional to the square of Br (the magnetic flux density). On the other hand, Br is proportional to the density of the magnet and the density, of course, is proportional to the content of ferrite powder.

For that reason, the ferrite powder content may be different depending of the final construction which will be produced. For instance, if the top-layer or wear layer is ceramic, and so it has a high weight, only a low magnetization is required and otherwise it would be too difficult to remove tiles from the support flooring due to the strong adhesion. Vice versa, in case of resilient top-layers, a higher magnetic power is necessary because of the low weight of the construction.

A typical recipe for a relatively low magnetic power structure, i.e. for structures with high weight wear layer, is reported below:
Linoleum Cement: 30%
Wood flour: 5%
Ferrite powder: 50%
Filler: 15%

All the ingredients considered above follow the standard production process of linoleum. They are mixed together in a mixer or blender, such as a Banbury mixer, then granulated to produce crumb and finally calendered on a natural jute backing 11 to form the sheet 10 (base (a)) with a backing layer 11 and a magnetizable linoleum based layer 12.

The thickness of the calendered product 10 is 1.00 mm at most. This low thickness and the particular formulation composed by a high content of ferrite powder allow the material to be cured in only 7-10 days, whereas linoleum 2.50 mm thick normally needs a few weeks.

After curing, the product is rolled up as normally done for standard linoleum. The thus obtained base (a) sheet, of course, does not have magnetic properties yet.

Considering the high weight of the magnetizable material in general and that of ferrite powder in particular, as well as the absence/low content of materials with low density (such as cork), in order to process the ingredients properly the Banbury batch load is increased. The batch load, depending on magnetic formulation used, must be increased of a factor of 1,3 or above (compared with standard linoleum batch load). On the other hand, it is desirable not to use excessively high ferrite quantities, because of a possible shortening of rotors life due to high friction. A specific surface treatment (hardening) can reduce the problem ensuring a longer components life.

### Step (1): Oxidation of linseed oil to produce linoleum cement - e.g. exactly the same process as for standard linoleum.

### Step (2): Mixing of the ingredients

1. Linoleum cement
2. Powders: wood/cork/fillers
3. Ferrite powder

For a proper mixing by Banbury, it is preferred to follow the sequence above: ferrite powder should be added as last ingredient and when the banbury has achieved the proper temperature.

The magnetic formulation is much more sensitive to process temperature than standard recipe. To enhance the mixing e.g. by Banbury it is preferable to have a temperature of at least above 45-50°C. Actually, the standard recipe can be mixed even at lower temperature with the consequence of an extended mixing time.

### Step (3): Calendering:

It has been found that the paste obtained in step (1) is preferably calendered at a temperature of around 60-70°C. For that reason, it is important to avoid cooling during crumb transportation from mixing process to calendering process. If the crumb temperature is too low, the risk of jute breaking increases strongly due to paste hardness. Due to the added ferrite powder content in the formulation with respect to conventional linoleum, the process is advantageously done with the paste at said higher temperatures, otherwise, by cooling, the product would get too hard and tough.

### Step (4): Curing

Both the formulation (which is preferably different of that of standard linoleum recipe, see above) and the low sheet thickness allow to shorten the curing time up to approx. 1 week (a few weeks are instead necessary for standard linoleum).

### Step (5): Magnetizing

The sheet produced, which can be simply base (a) (Fig. 1) or layered structures comprising further layers (Fig. 2, see below), may be cut into tiles, if desirable, e.g. in 50x50 cm or 61x61 cm by a die cutting.

The tiles obtained are magnetized by a specific magnetizer, which is suitable to orientate the magnetic domains inside the material by exerting a magnetic field. The equipment is mainly made of a permanent magnetic bar or roll or electromagnetic plate or roll. The tiles are pulled in order to pass trough the machine.

The magnetic structure achieved after step (4) is magnetized and can be used as such as magnetic backing for covering metallic surfaces. As an alternative, resilient or ceramic top-layers can be glued to the magnetized structure after or preferably before magnetization (5) to avoid troubles described above.

### Case 2: Production of a layered structure with resilient or acoustic layer

In Fig. 2, the magnetic layered structure is produced by coupling base (a) with a resilient and/or acoustic layer 20, such as an Elafono sheet (Fig. 3) or a foam sheet (Fig. 4).

In Fig. 3, the Elafono layer 20 is a natural underlayer made of cork grain and linoleum cement as binder 22, the whole is calendered on jute backing 21. It is a standard Tarkett linoleum product used for resilient and acoustic performances. The standard thickness is 2.00 mm, but for that purpose can be produced by reducing thickness up to 1.30 mm.

The coupling process of the Elafono layer 20 on base (a) layer 10 was made by an "auma" press with continuous heating.

Three products were fed to the auma:
1- Base (a) 10 (upside-down, which means with jute side up)
2- PE Hotmelt 15
3- Elafono 20 (jute side down)

The auma was set at above 120°C and at above 90 bars of pressure.

The layers are coupled by the passage trough the auma and then rolled.

In a second embodiment (Fig. 4), Elafono is replaced by a PU foam 20, which is a mixture of polyurethane polymer and rubber or polyurethane elastomers. The foam density can range in a wide interval and interesting resilient and acoustic properties can be achieved. The foam thicknesses tested are 1.30 mm and 2.00 mm. The production process is simplified by using a foam provided with a pre-glued hotmelt 15, so only two layers 10 and [15+20] have to be managed in the auma.

### Case 3: Production of a layered structure with wear layer

According to customer's needs, the layered structure with wear layer can be provided with a resilient and intermediate layer (b), if acoustic and/or resilient performances are required, or not. The wear layer can be made of any appropriate flexible or stiff material, such as stone, ceramic, wood, metal, carpet, resilient materials (such as plastic, rubber and linoleum). Normally in case of resilient wear layers the layer (b) is recommended in order to provide a product able to absorb better surface unevenness.

The wear layer is glued, by spreading or spraying any appropriate adhesive on the surfaces, onto the magnetic backing, which can be simply the base (a) as described in case 1 or the layered structure with resilient and/or acoustic layer as described in case 2.

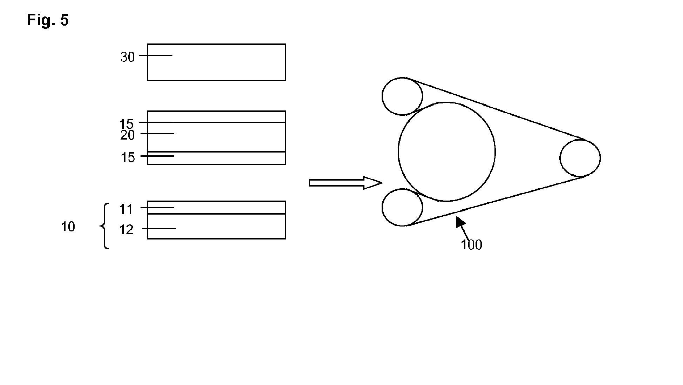

In a further embodiment, if the layered structure with an intermediate foam layer is required, the complete construction can be produced by a single-step process. That is possible by using a foam provided with pre-glued hotmelts on both its faces (Fig.5).

Three products were fed the auma
1- Base (a) 10 (upside-down, which means with jute side up)
2- Foam (b) provided with pre-glued hotmelts 15 on both its faces
3- Wear layer 30 (if linoleum, jute side down)

### Legend:

- 10: **Base (a)**
- 11: Backing layer (a1)
- 12: Magnetic linoleum based layer (a2)
- 15: Adhesive
- 20: **Resilient and/or acoustic layer (b)**
- 21: Backing layer
- 22: Linoleum based layer
- 30: **Wear layer**
- 40: **Floor covering**
- 50: **Steel surface**
- 100: **Continuous heating press**

## Claims

1. A layered structure reversibly attachable to a magnetically attractable support, said structure comprising
a base (a) comprising
(a1) a textile backing layer, preferably made of natural jute, and
(a2) a linoleum based layer comprising oxidized drying oil, rosin-type
component and optionally auxiliary material(s), wherein the linoleum based layer further comprises 30 to 70 % by weight, preferably 35 to 65 % by weight of a particulate magnetized material based on layer (a2).

2. The layered structure as claimed in claim 1, wherein the particulate magnetized material is a ferrite powder, preferably a strontium ferrite powder, more preferably hexagonal strontium ferrite SrFe₁₂O₁₉ powder.

3. The layered structure as claimed in claim 1 or 2, wherein the oxidized drying oil is an unsaturated oil, preferably a polyunsaturated oil chosen among linseed oil, tung oil, soya oil, sunflower oil, perilla oil, walnut oil and/or poppy seed oil.

4. The layered structure as claimed in claim 1 to 3, wherein the rosin-type component is chosen among rosin, tall oil esters and mixtures thereof, preferably the rosin-type component is essentially tall oil esters, in particular tall oil pentaerythrityl ester.

5. The layered structure as claimed in any one of claims 1 to 4, wherein the thickness of base (a) is between 0.5 and 3 mm, preferably between 0.75 and 1.5 mm.

6. The layered structure as claimed in any one of claims 1 to 5, wherein said auxiliary material(s) is (are) chosen among fillers, preferably calcium carbonate, processing aids, preferably wood or cork flour, and catalysts.

7. The layered structure as claimed in any one of claims 1 to 6, further comprising (c) a wear layer made of stone, ceramic, wood, metal, carpet, resilient materials, such as plastic, rubber or linoleum, either directly affixed to base (a) or through an intermediate resilient and/or acoustic layer (b).

8. The layered structure as claimed in claim 7, comprising a natural resilient and/or acoustic layer (b) comprising cork, preferably linoleum with a cork content from 10 to 45 % by weight, or a synthetic resilient and/or acoustic layer (b), preferably a synthetic foam layer, more preferably a polyurethane foam layer.

9. The layered structure as claimed in claims 7 or 8, wherein wear layer (c) or, if present, resilient and/or acoustic layer (b) is affixed to backing layer (a1) of base (a).

10. The layered structure as claimed in any one of claims 7 to 9, wherein the layers (a) and (c), and, if present, layer (b) are affixed together with an adhesive, preferably a hotmelt adhesive.

11. Use of a layered structure as claimed in any one of claims 1 to 10 for reversibly attaching said structure to a surface, preferably a floor surface, wherein said surface is a magnetically attractable support surface.

12. A method for producing a layered structure, comprising the steps of
(1) oxidation of drying oil, rosin-type component and optionally auxiliary material(s) to produce linoleum cement,
(2) mixing linoleum cement and optionally further auxiliary material(s) with 30 to 70 % by weight, preferably 35 to 65 % by weight of a particulate magnetizable material based on the mixture of step (2),
(3) calendering the mixture of step (2) on a textile backing layer (a1), preferably made of natural jute, to provide a base (a),
(4) curing said base (a) to polymerise the drying oil, and
(5) magnetizing the particulate magnetizable material in cured base (a) by exposure to a magnetic field.

13. The method according to claim 12, further comprising the step of affixing a resilient and/or acoustic layer (b) to the cured base (a), preferably to the backing layer (a1) side of said cured base (a), preferably using an adhesive, more preferably a hotmelt adhesive.

14. The method according to claim 12 or 13, further comprising the step of affixing a wear layer (c) to base (a), preferably to the backing layer (a1) side of said cured base (a), or, if present, to layer (b), preferably using an adhesive, more preferably a hotmelt adhesive.

15. The method according to any one of claims 12 to 14, further comprising the step of
cutting the layered structure into tiles, strips, or any other desirable shape, preferably before step (5).
